# EUROPEAN PATENT SPECIFICATION

(11) **EP 1 932 691 B1**
(45) Date of publication and mention of the grant of the patent: **07.09.2011**
(21) Application number: 07123257.3
(22) Date of filing: 14.12.2007
(51) Int. Cl.: B60G 3/20, B60G 7/00, B62D 7/18

(54) **Suspension system for steering wheels of transport vehicle of the bus type, and corresponding transport vehicle**
Aufhängungssystem zum Steuern der Räder eines Transportbusses und entsprechender Transportbus
Système de suspension pour roues de direction de véhicule de transport de type bus, et véhicule de transport correspondant

(30) Priority: 15.12.2006 FR 0610928
(43) Date of publication of application: 18.06.2008
(73) Proprietor: Iveco France S.A., 69200 Vénissieux (FR)
(72) Inventor: Leorat, Pascal, 07690 Villevocance (FR)
(74) Representative: Borsano, Corrado

(56) References cited:
- EP-A- 1 147 927
- EP-A- 1 213 162
- EP-A- 1 557 339
- EP-A1- 0 494 393
- EP-A2- 1 213 206
- WO-A-01/62576
- WO-A-2006/025780
- DE-A1- 10 252 135
- ROUQUETTE J: "ZF DEVOILE SES DERNIERES NOUVEAUTES" REVUE TECHNIQUE DIESEL, ETAI, BOULOGNE BILLANCOURT, FR, vol. 37, no. 225, September 2000 (2000-09), pages 42-44, XP000969451 ISSN: 0037-2579
- "ANNOUNCEMENT" AUTOMOTIVE ENGINEER, PROFESSIONAL ENGINEERING PUBLISHING, LONDON, GB, vol. 19, no. 5, 1 October 1994 (1994-10-01), pages 12-13, XP000472088 ISSN: 0307-6490
- STENGELIN A: "DER NEUE REISEBUS O 404 VON MERCEDES-BENZ" ATZ AUTOMOBILTECHNISCHE ZEITSCHRIFT, VIEWEG PUBLISHING, WIESBADEN, DE, vol. 94, no. 1, January 1992 (1992-01), pages 4-6,8,11, XP000241628 ISSN: 0001-2785

## Description

The present invention concerns a suspension system for the steering wheels of a low-floored transport vehicle, such as a coach, as well as a transport vehicle of this variety including at least one such suspension system.

According to the invention, the average height of a low-floored transport vehicle in relation to the road is, usually, less than 450mm. According to this invention, a low-floored transport vehicle is, for example, a bus.

Typically, the opposite steering wheels of a bus are linked by a single axle, while the steering acts on one of these wheels only, which in turn drives the opposite wheel. This is known as solid-axle assembly.

Transport vehicles, of the coach variety, are also known to have axles with independent wheels. For this purpose, a central steering gear-box works an intermediate lever, onto which two connecting rods are jointed.

Furthermore, the suspension system associated with each steering wheel includes a spindle, joined to the wheel hub, as well as two wishbones, upper and lower respectively, jointed in relation to said spindle by means of ball joints. Finally, each spindle supports a connection organ, to which is jointed a corresponding connection rod, belonging to the vehicle's steering system.

This solution is very satisfactory, notably insofar as the driving comfort is much higher to that provided by a single axle. However, in its simple form it is not suitable for low-floored vehicles such as those that are the object of this invention. In such conditions, the invention aims to propose a low-floored vehicle, of the aforementioned variety, which includes a suspension system able to cooperate, in a simple way, with a steering system equipped with independent axles. The patent EP1213162 discloses an asymmetrical lower wishbone of an independent wheels vehicle. Said wishbone is able to be connected to the body of a vehicle by means of two parallel pins.

A steering swivel mounting is connected to a lower wishbone by means of a pivot parallel to said two parallel pins. Moreover, the steering swivel mounting is a knuckle-inertial and is connected to an upper wishbone by a ball-and-socket joint. But it is not configured to save the maximum space possible.

WO 2006/025780A, EP0494393A, DE10252135A, WO2006/041348A disclose relevant suspension systems.

For this purpose, it has as its object a suspension system for steering wheels of low-floored independent wheels transport vehicle, of the bus variety, comprising a spindle intended to be joined to the hub of the wheel, an upper wishbone and a lower wishbone jointed to the spindle, which are intended to be joined to the body of the vehicle, as well as a bar connecting to the vehicle's steering system, said connecting bar being joined to the spindle, the lower wishbone is asymmetrical in relation to a transverse axis of the vehicle, so as to delimit a free area extending roughly, in operation, on the same horizontal plane as said lower wishbone, and in that the connecting bar also extends roughly on the same plane as the lower wishbone, characterised in that the lower wishbone comprises a stem and two legs defining a plane, both extending out from the stem, the stem being shaped so that the connecting bar is able to be connected to the spindle by running under said stem and by lying into said plane defined by said legs.

According to an advantageous characteristic of the invention, the lower wishbone comprises a stem extending out from a ball joint of said suspension system to the spindle, an axial leg as well as a lateral leg, both extending out from the stem. The invention also has as its object a low-floored transport vehicle, of the bus variety, including a body, at least two opposite steering wheels, a steering system that works said steering wheels, characterised in that each of the steering wheels is equipped with a suspension system such as that defined above, and in that the steering system includes two independent connecting rods, each one of which is jointed to the connecting bar of a corresponding suspension system.

According to other characteristics of the invention:
- each connecting rod extends into the free area defined by the lower wishbone of a corresponding suspension system ;
- the free area delimited by the lower wishbone is placed to the front of said wishbone, with reference to the travelling direction of the vehicle;
- the lower wishbone is fixed beneath the floor of the vehicle body ;
- a reversing lever, a cross-shaft lever and an interconnecting tie rod extend beneath the floor of the vehicle;
- the upper wishbone is fixed against one lateral side of the vehicle body;
- when the vehicle is running, the floor stands at a height that is less than 450mm above the road surface;
- said vehicle is equipped with a compound unit, forming a suspension pad and shock absorber.

The invention will be better understood and other advantages of said invention will become clearer in the light of the following description of a method of realisation of a suspension system and a transport vehicle according to its principle, given purely by way of non-limitative example and with reference to the annexed drawing, in which:
- figure 1 is a perspective view, illustrating a suspension system according to this invention, associated with a steering system belonging to a transport vehicle according to the invention;
- figure 2 is a view from below, illustrating in greater detail the lower wishbone belonging to the suspension system in figure 1; and
- figure 3 is a rear view, illustrating in greater detail the association of said suspension system and the body of the transport vehicle which is equipped with it.

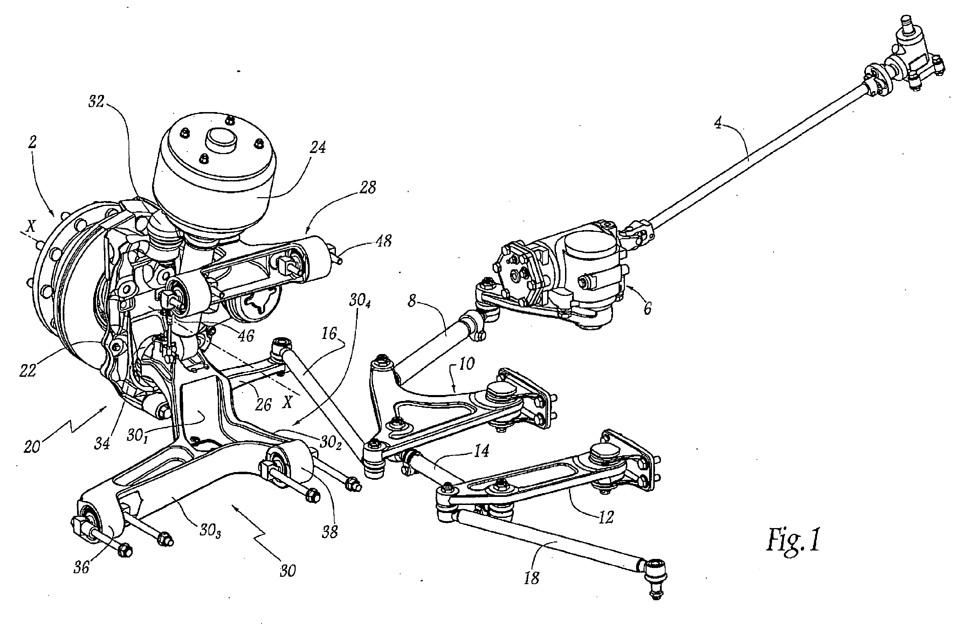

Figure 1 illustrates a steering system of a low-floored transport vehicle, of the bus variety, which is associated with a suspension system of said vehicle. In said figure 1, the front of the vehicle is situated at the top right of the page, the back corresponding to the bottom left of the same page. The suspension system described below equips the one of the steering wheels placed at the front left of the vehicle, of which only the hub 2 is shown. It should be understood that the suspension system equipping the right-hand of the steering wheels, which is not shown, is the same as that equipping this left-hand wheel.

The steering system with which this vehicle is equipped is of the "integral power steering" variety. In a known manner it includes a steering shaft 4, driven by the steering wheel which is not shown, which subsequently cooperates with a steering gear-box 6, as well as with a steering rod 8. The latter is jointed to a reversing lever 10, which is in turn linked to a cross-shaft lever 12, with an interconnecting tie rod 14 between them.

The two levers 10 and 12 are also jointed, about an axis that is generally vertical in operation, to two connecting rods 16 and 18, of which one 16 is suitable to cooperate with the suspension system shown equipping the left-hand wheel of the vehicle, and of which the other 18 is suitable to cooperate with the suspension system not shown equipping the right-hand wheel of the same vehicle.

The left-hand suspension system, designated in its entirety by the number 20, typically includes a spindle 22, joined to the wheel hub 2, as well as a compound unit 24, forming a suspension pad and shock absorber.

There is also included a connecting bar 26, extending out from the spindle 22, on which the connecting rod 16 belonging to the vehicle's steering system is jointed. Lastly, two wishbones, respectively upper 28 and lower 30 are jointed onto the spindle 22, by means of corresponding ball joints, designated in their entirety by numbers 32 and 34 respectively.

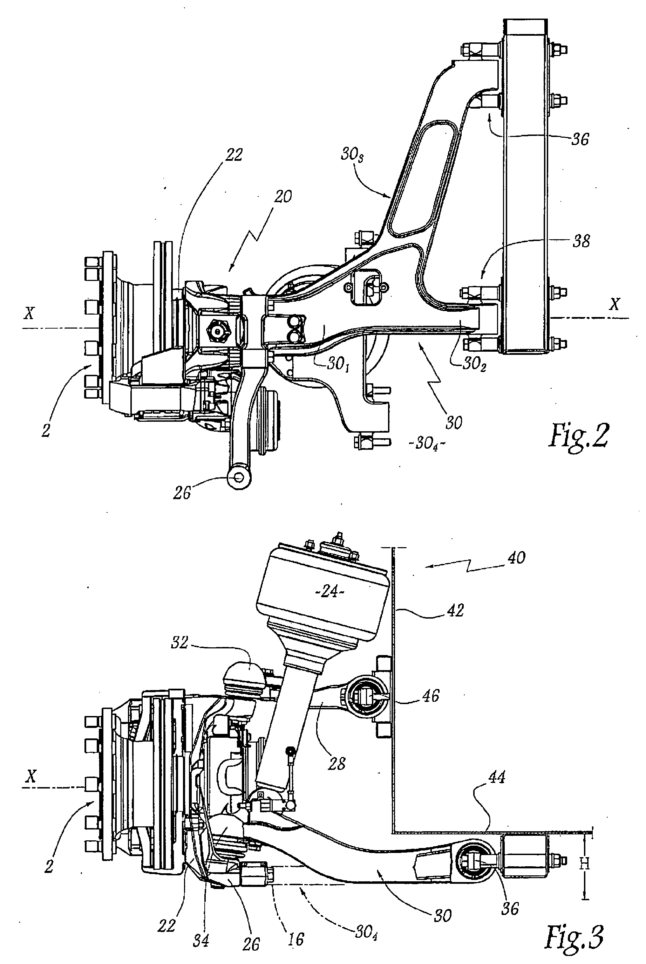

The structure of the lower wishbone 30 shall now be described in greater detail, notably with reference to figure 2, which shows it viewed from above.

If we mark X-X as a transverse axis of the vehicle, linking the opposite steering wheels, the lower wishbone 30 is asymmetrical in relation to said transverse axis. Thus, it includes firstly a stem 30₁, arranged next to the ball joint 34, a first leg 30₂, described as axial as it is roughly parallel to said axis X-X, as well as a second leg 30₃, described as lateral insofar as it extends obliquely in relation to the same axis. The free ends of these two legs 30₂ and 30₃ are equipped with fastening elements by which they are fastened to the body 40 of the vehicle, which can be seen in more detail in figure 3. Said fastening elements are in this case formed by flexible pins 36 and 38, which are of a known variety.

Once again referring to figure 2, opposite the lateral leg 30₃ in relation to the X-X axis, the lower wishbone 30 defines a free area 30₄, extending roughly at the same height as the other components 30₁ to 30₃ of said lower wishbone 30. The function and the advantages of said free area 30₄ shall be explained in greater detail below.

Note also, particularly with reference to figure 3, that the connecting bar 26, joined to the spindle 22, also extends roughly on the same plane as the lower wishbone 30, protruding towards the front of the vehicle, i.e. opposite the lateral leg 30₃. In such conditions, the connecting rod 16 belonging to the steering system can be received in the free area 30₄, so that it too can extend roughly on the same plane as said lower wishbone 30.

In figure 3, where the connecting rod 16 is shown in broken lines, we can also see the vehicle body 40, of which the lateral side is numbered 42 and the floor is numbered 44. The lower wishbone 30 is thus placed beneath the floor 40, being fastened to it by means of pins 36 and 38. Furthermore, the upper wishbone 28 is fastened to the lateral side 42, by means of supplementary flexible pins 46 and 48, which resemble those numbered 36 and 38. It is emphasized that various elements of the steering system are placed beneath the floor 44, which in particular are the interconnecting tie rod 14, the connecting rod 16, as well as the two levers 10 and 12.

The invention enables the aforementioned objectives to be achieved.

Thus, the asymmetrical nature of the lower wishbone 30 allows the free area 30₄, to be delimited which allows the presence of various mechanical components belonging to the vehicle's suspension and steering systems. Consequently, the aforementioned mechanical components can be placed beneath the floor of the vehicle, so that the latter can itself lie at a low height.

In this respect, it is to the Claimant's credit that she has highlighted that, in the solution with independent axles equipping coaches of a known variety, the symmetrical nature of the lower wishbone makes it necessary to place the connecting bar of the suspension system at a fairly high height. In such conditions, the various elements of the steering system, jointed to said connecting bar, must also be placed at a substantial height, making it impossible to apply this solution to a low-floored vehicle, such as a coach.

On the contrary, the solution proposed by this invention makes it possible to use a steering system with independent axles together with a low floor, without however making any substantial changes to said steering system with respect to the variety with which coaches are typically equipped. In this respect, notably in reference to figure 3, note that the floor 44 of the vehicle according to the invention is situated in operation at a low height, marked H, which is typically around 450mm.

## Claims

1. Suspension system (20) for steering wheels of low-floored independent wheels transport vehicle, of the bus variety, comprising a spindle (22) intended to be joined to the hub (2) of the wheel, an upper wishbone (28) and a lower wishbone (30) jointed to the spindle (22), which are intended to be joined to the body (40) of the vehicle, as well as a bar (26) connecting to the vehicle's steering system (4, 6, 8, 10, 12, 14, 16, 18), said connecting bar (26) being joined to the spindle (22), the lower wishbone (30) is asymmetrical in relation to a transverse axis (X-X) of the vehicle, so as to delimit a free area (304) extending roughly, in operation, on the same horizontal plane as said lower wishbone (30), and in that the connecting bar (26) also extends roughly on the same plane as the lower wishbone (30), **characterised in that** the lower wishbone (30) comprises a stem (30₁) and two legs (30₂ and 30₃) defining a plane, both extending out from the stem (30₁), the stem (30₁) being shaped so that the connecting bar (26) is able to be connected to the spindle (22) by running under said stem (30₁) and by lying into said plane defined by said legs (30₂ and 30₃).

2. Suspension system according to claim 1, **characterised in that** said stem (30₁) is about 180° rotated L shaped.

3. Suspension system according to claim 1 or 2, **characterised in that** said two legs (30₂ and 30₃) comprises an axial leg (30₂) as well as a lateral leg (30₃).

4. Suspension system according to any of claims 1 to 3, **characterised in that** said lower wishbone (30) is able to be fastened beneath a floor (44) of a vehicle body (40) by means two parallel pins (36 and 38).

5. Suspension system according to any of claims 1 to 4, **characterised in that** said spindle (22) is connected to said upper wishbone (28) and said lower wishbone (30) by means two ball joins (32 and 34).

6. Low-floored independent wheels transport vehicle, of the bus variety, including a body (40), at least two opposite steering wheels, a steering system (4, 6, 8, 10, 12, 14, 16, 18) driving said steering wheels, **characterised in that** each of the steering wheels is equipped with a suspension system (20) according to any of the previous claims, and **in that** the steering system includes two independent connecting rods (16, 18), each of which is jointed to the connecting bar (26) of a corresponding suspension system.

7. Low-floored transport vehicle according to claim 6, **characterised in that** each connecting rod (16, 18) extends into the free area (30₄) defined by the lower wishbone (30) of a corresponding suspension system (20).

8. Low-floored transport vehicle according to claim 6 or 7, **characterised in that** the free area (30₄) delimited by the lower wishbone (30) is placed to the front of said wishbone, with reference to the travelling direction of the vehicle.

9. Low-floored transport vehicle according to any of claims 6 to 8, **characterised in that** the lower wishbone (30) is fastened beneath the floor (44) of the vehicle body (40) by means two parallel pins (32 and 34).

10. Low-floored transport vehicle according to claim 9, **characterised in that** a reversing lever (10), a cross shaft lever (12) and an interconnecting tie rod (14) connecting to the steering system extend beneath the floor (44) of the vehicle.

11. Low-floored transport vehicle according to any of claims 6 to 10, **characterised in that** the upper wishbone (28) is fastened against a lateral side (42) of the vehicle body (40).

12. Low-floored transport vehicle according to any of claims 6 to 11, **characterised in that** the floor (44) lies, in operation, at a height (H) in relation to the road surface which is less than 450mm.

13. Low-floored transport vehicle according to any of claims 6 to 12, **characterised in that** said vehicle is equipped with a compound unit (24) forming a suspension pad and shock absorber.

## Patentansprüche

1. Aufhängungssystem (20) zum Steuern von Rädern von Niederflur-Transportfahrzeugen der Busvielfalt mit unabhängigen Rädern, umfassend eine Spindel (22), die zur Verbindung mit der Nabe (2) des Rades vorgesehen ist, einen oberen Dreiecklenker (28) und einen unteren Dreiecklenker (30), die mit der Spindel (22) verbunden und dafür vorgesehen sind, mit der Karosserie (40) des Fahrzeugs verbunden zu werden, und auch einen Balken (26), der mit dem Lenkungssystem (4, 6, 8, 10, 12, 14, 16, 18) des Fahrzeugs verbunden ist, wobei der Verbindungsbalken (26) mit der Spindel (22) verbunden ist, der untere Dreiecklenker (30) bezogen auf eine Querachse (X-X) des Fahrzeugs asymmetrisch ist, um **dadurch** eine freie Fläche (304) zu begrenzen, die sich im Betrieb grob in der derselben horizontalen Ebene wie der untere Dreiecklenker (30) erstreckt und in welcher sich der Verbindungsbalken (26) ebenso grob in derselben Ebene wie der untere Dreiecklenker (30) erstreckt,
**dadurch gekennzeichnet, dass**
der untere Dreiecklenker (30) einen Schaft (30₁) und zwei Beine (30₂ und 30₃) umfasst, die eine Ebene definieren und sich beide von dem Schaft (30₁) nach außen erstrecken, wobei der Schaft (30₁) derart geformt ist, dass der Verbindungsbalken (26) in der Lage ist, mit der Spindel (22) verbunden zu werden, indem diese unter dem Schaft (30₁) läuft und in der Ebene liegt, die durch die Beine (30₂ und 30₃) definiert ist.

2. Aufhängungssystem nach Anspruch 1,
**dadurch gekennzeichnet, dass**
der Schaft (301) um ungefähr 180° gedreht L-förmig ist.

3. Aufhängungssystem nach Anspruch 1 oder 2,
**dadurch gekennzeichnet, dass**
die zwei Beine (30₂ und 30₃) ein axiales Bein (30₂) und auch ein quer verlaufendes Bein (30₃) umfassen.

4. Aufhängungssystem nach einem der Ansprüche 1 bis 3,
**dadurch gekennzeichnet, dass**
der untere Dreiecklenker (30) in der Lage ist, unter einem Boden (44) der Fahrzeugkarosserie (40) mittels zweier paralleler Stifte (36 und 38) befestigt zu werden.

5. Aufhängungssystem nach einem der Ansprüche 1 bis 4,
**dadurch gekennzeichnet, dass**
die Spindel (22) mit dem oberen Dreiecklenker (28) und dem unteren Dreiecklenker (30) mittels zweier Kugelverbindungen (32 und 34) verbunden ist.

6. Niederflur-Transportfahrzeug mit unabhängigen Rädern von der Busvielfalt, umfassend eine Karosserie (40), zumindest zwei gegenüberliegende Lenkungsräder, ein Lenkungssystem (4, 6, 8, 10, 12, 14, 16, 18), das die Lenkungsräder antreibt,
**dadurch gekennzeichnet, dass**
jedes der Lenkungsräder mit einem Aufhängungssystem (20) nach einem beliebigen der vorstehenden Ansprüche ausgestattet ist und **dadurch**, dass das Lenkungssystem zwei unabhängige Verbindungsstangen (16, 18) aufweist, von denen jede mit dem Verbindungsbalken (26) eines entsprechenden Aufhängungssystems verbunden ist.

7. Niederflur-Transportfahrzeug nach Anspruch 6,
**dadurch gekennzeichnet, dass**
jede Verbindungsstange (16, 18) sich in die freie Fläche (30₄) erstreckt, die durch den unteren Dreiecklenker (30) eines entsprechenden Aufhängungssystems (20) definiert ist.

8. Niederflur-Transportfahrzeug nach Anspruch 6 oder 7,
**dadurch gekennzeichnet, dass**
die freie Fläche (30₄), die durch den unteren Dreiecklenker (30) begrenzt ist, an der Vorderseite des Dreiecklenkers bezogen auf die Bewegungsrichtung des Fahrzeugs angeordnet ist.

9. Niederflur-Transportfahrzeug nach einem der Ansprüche 6 bis 8,
**dadurch gekennzeichnet, dass**
der untere Dreiecklenker (30) unter dem Boden (44) der Fahrzeugkarosserie (40) mittels zweier paralleler Stifte (32 und 34) befestigt ist.

10. Niederflur-Transportfahrzeug nach Anspruch 9,
**dadurch gekennzeichnet, dass**
ein Umlenkhebel (10), ein Querwellenhebel (12) und eine verbindende Zugstange (14), die mit dem Lenkungssystem verbunden sind, sich unter dem Boden (44) des Fahrzeugs erstrecken.

11. Niederflur-Transportfahrzeug nach einem der Ansprüche 6 bis 10,
**dadurch gekennzeichnet, dass**
der untere Dreiecklenker (28) an einer Querseite (42) der Fahrzeugkarosserie (40) befestigt ist.

12. Niederflur-Transportfahrzeug nach einem der Ansprüche 6 bis 11,
**dadurch gekennzeichnet, dass**
der Boden (44) im Betrieb bei einer Höhe (H) bezogen auf die Straßenoberfläche liegt, die weniger als 450 mm beträgt.

13. Niederflur-Transportfahrzeug nach einem der Ansprüche 6 bis 12,
**dadurch gekennzeichnet, dass**
das Fahrzeug mit einer zusammengesetzten Einheit (24) ausgestattet ist, die ein Aufhängungskissen und einen Stoßdämpfer bildet.

## Revendications

1. Système de suspension (20) pour roues directrices d'un véhicule de transport à plancher bas à roues indépendantes, du type autobus, comprenant une fusée (22) destinée à être assemblée au moyeu (2) de la roue, un triangle supérieur (28) et un triangle inférieur (30) assemblés à la fusée (22), qui sont destinés à être assemblés à la caisse (40) du véhicule, ainsi qu'une barre (26) se raccordant au système de direction (4, 6, 8, 10, 12, 14, 16, 18) du véhicule, ladite barre de connexion (26) étant assemblée à la fusée (22), le triangle inférieur (30) est asymétrique par rapport à un axe transversal (X-X) du véhicule, afin de délimiter une zone libre (304) s'étendant approximativement, en service, sur le même plan horizontal que ledit triangle inférieur (30), et en ce que la barre de connexion (26) s'étend également approximativement sur le même plan que le triangle inférieur (30), **caractérisé en ce que** le triangle inférieur (30) comprend une tige (30₁) et deux pattes (30₂ et 30₃) définissant un plan, les deux s'étendant à partir de la tige (30₁), la tige (30₁) étant formée de sorte que la barre de connexion (26) peut être raccordée à la fusée (22) en s'étendant sous ladite tige (30₁) et en se trouvant dans ledit plan défini par lesdites pattes (30₂ et 30₃).

2. Système de suspension selon la revendication 1, **caractérisé en ce que** ladite tige (30₁) est approximativement en forme de L entraînée en rotation à 180°.

3. Système de suspension selon la revendication 1 ou 2, **caractérisé en ce que** lesdites deux pattes (30₂ et 30₃) comprennent une patte axiale (30₂) ainsi qu'une patte latérale (30₃).

4. Système de suspension selon l'une quelconque des revendications 1 à 3, **caractérisé en ce que** ledit triangle inférieur (30) peut être fixé au-dessous d'un plancher (44) d'une caisse (40) de véhicule au moyen de deux broches parallèles (36 et 38).

5. Système de suspension selon l'une quelconque des revendications 1 à 4, **caractérisé en ce que** ladite fusée (22) est raccordée audit triangle supérieur (28) et audit triangle inférieur (30) au moyen de deux joints à rotule (32 et 34).

6. Véhicule de transport à plancher bas à roues indépendantes du type autobus, comprenant une caisse (40), au moins deux roues de direction opposée, un système de direction (4, 6, 8, 10, 12, 14, 16, 18) entraînant lesdites roues de direction, **caractérisé en ce que** chacune des roues de direction est équipée d'un système de suspension (20) selon l'une quelconque des revendications précédentes, et **en ce que** le système de direction comprend deux tiges de raccordement indépendantes (16, 18) dont chacune est assemblée à la barre de connexion (26) d'un système de suspension correspondant.

7. Véhicule de transport à plancher bas selon la revendication 6, **caractérisé en ce que** chaque tige de raccordement (16, 18) s'étend dans une zone libre (30₄) définie par le triangle inférieur (30) d'un système de suspension (20) correspondant.

8. Véhicule de transport à plancher bas selon la revendication 6 ou 7, **caractérisé en ce que** la zone libre (30₄) délimitée par le triangle inférieur (30) est placée à l'avant dudit triangle, en référence à la direction de déplacement du véhicule.

9. Véhicule de transport à plancher bas selon l'une quelconque des revendications 6 à 8, **caractérisé en ce que** le triangle inférieur (30) est fixé au-dessous du plancher (44) de la caisse (40) du véhicule au moyen de deux broches parallèles (32 et 34).

10. Véhicule de transport à plancher bas selon la revendication 9, **caractérisé en ce qu'**un levier de renvoi (10), un levier relais (12) et une biellette de liaison (14) se raccordant au système de direction s'étendent au-dessous du plancher (44) du véhicule.

11. Véhicule de transport à plancher bas selon l'une quelconque des revendications 6 à 10, **caractérisé en ce que** le triangle supérieur (28) est fixé contre un côté latéral (42) de la caisse (40) du véhicule.

12. Véhicule de transport à plancher bas selon l'une quelconque des revendications 6 à 11, **caractérisé en ce que** le plancher (44) se trouve, en service, à une hauteur (H) par rapport à la surface à la route qui est inférieure à 450 mm.

13. Véhicule de transport à plancher bas selon l'une quelconque des revendications 6 à 12, **caractérisé en ce que** ledit véhicule est équipé d'une unité combinée (24) formant un coussin de suspension et un amortisseur.
